Europäisches Patentamt

European Patent Office

Office européen des brevets

(19)

(11) Publication number: **0 123 223**
**A2**

(12) # EUROPEAN PATENT APPLICATION

(21) Application number: **84104135.3**

(22) Date of filing: **12.04.84**

(51) Int. Cl.³: **G 11 B 7/24**

(30) Priority: **12.04.83 JP 64035/83**

(43) Date of publication of application:
**31.10.84 Bulletin 84/44**

(84) Designated Contracting States:
**DE NL**

(71) Applicant: **FUJI PHOTO FILM CO., LTD.**
**210 Nakanuma Minami Ashigara-shi**
**Kanagawa 250-01(JP)**

(72) Inventor: **Masuda, Toshiyuki**
**No. 200, Onakazato**
**Fujinomiya-shi Shizuoka(JP)**

(72) Inventor: **Takahashi, Yonosuke**
**No. 200, Onakazato**
**Fujinomiya-shi Shizuoka(JP)**

(74) Representative: **Dr. E. Wiegand Dipl.-Ing. W. Niemann**
**Dr. M. Kohler Dipl.-Ing. J. Glaeser Dr. H.-R. Kressin**
**Patentanwälte**
**Herzog-Wilhelm-Strasse 16**
**D-8000 München 2(DE)**

(54) Laser recording medium.

(57) A laser recording medium is disclosed. The medium is comprised of a transparent base having thereon a laser readable-recordable material layer. On the surface opposite the laser readable-recordable layer is provided an inorganic material film which in turn has a protective layer provided thereon. The protective layer is comprised of a radiation hardenable resin film or a plasma polymerization film. The inorganic material layer provides excellent moisture protection and the protective film provides improved scratch resistance. The layers have been found to adhere together well and provide an improved laser recording medium.

EP 0 123 223 A2

# LASER RECORDING MEDIUM

## FIELD OF THE INVENTION

The present invention relates to an information recording medium having a recording material layer capable of feeding and/or reading informations with laser provided on a transparent plastic base and, more specifically to a laser recording medium wherein deformation of the base caused by moisture absorption is prevented.

## BACKGROUND OF THE INVENTION

Laser recording media which record data by making fine deformation or holes or by changing reflectivity therein have attracted special interest and video disks utilizing them have recently been marketed. These laser recording media are classified into those which optically record data after production thereof and those which record data during production thereof.

The basic structure of the laser recording media consists of a transparent base and a recording material layer provided on one side of the base. Improvements have been proposed, examples of which include a recording medium wherein the recording material is provided on the transparent base through a protective layer and a coating layer for stabilization is provided on the recording material layer as described in Japanese Patent Application (OPI) 189894/82, a recording medium wherein a protective layer is provided on a recording material layer through a spacer as described in

Japanese Patent Application (OPI) 156605/77, a recording medium wherein two laser recording media are bonded through a spacer so that the recording material layers are opposite to each other, and a recording medium wherein two laser recording media are bonded with an adhesive so that the recording material layers are opposite to each other as described in Japanese Patent Application (OPI) 172543/82.

With respect to the base, it is required that it: be transparent, have no optical anisotropy, be cheap and not change shape, etc. Generally, polymethyl methacrylate resin is used. With respect to the recording material layer, it is required that it: have less toxicity, allow for easy formation of the film on the base and fuse, evaporate or change its reflectivity upon the application of a small amount of energy, etc. Generally, metals such as Ge, Te, Bi or In, etc. are used. Further, in duplicated disks specially designed for reproduction, metals having a high reflection factor such as Al or Cr, etc. are used.

When using polymethyl methacrylate resin for the base, there may be deformation by permeation of water in the air, because it causes great hygroscopic swelling. For example, with a structure wherein a recording material layer is applied to one side of the base by vacuum evaporation, a warp is produced, because a hygroscopic rate of the side having a recording material layer is different from that of the opposite side thereof, and consequently, the reflecting direction of laser beams varies or becomes uneven or holes formed on the recording material layer get out of position. Further, when the deformation is beyond the tolerance of an automatic focus controlling mechanism in the recording reproduction apparatus, feeding and reading become impossible. In order to prevent hygroscopic deformation, attempts have been made at applying a film of an inorganic material such as an inorganic oxide, for example, silicon monoxide (SiO), silicon dioxide (SiO$_2$), aluminium oxide (Al$_2$O$_3$), stannic oxide (SnO$_2$) or indium oxide (In$_2$O$_3$), etc. or inorganic fluoride such as magnesium fluoride (MgF$_2$), etc. to the opposite side of the base with respect to the recording material layer by vacuum evaporation or spattering, etc., as described in Japanese Patent Applications (OPI) 55545/82 and 66542/82. However, the inorganic thin film formed by vacuum evaporation is not desirable in that it generally has inferior scratch-proofing properties and easily comes off during handling.

### SUMMARY OF THE INVENTION

The present invention provides a laser recording medium having excellent scratch-proofing properties and which undergoes less hygroscopic deformation, wherein a radiation hardenable resin film or a plasma polymerization film is provided on an inorganic material thin layer.

Namely, the present invention relates to a laser recording medium comprising a transparent plastic base and a recording material layer capable of feeding and/or reading data with laser provided on said base. This type can contain data which can be read with the use of a laser or it can be encoded with data by a laser, i.e. a laser readable-recordable material. An inorganic material film is provided on the opposite side of said base with respect to the side where the recording material layer is provided, and a radiation hardening resin film or a plasma polymerization film is provided thereon.

BRIEF DESCRIPTION OF THE DRAWINGS

Figure 1 is a section of a laser recording medium comprising a recording layer provided on one side of a base; and

Figure 2 is a section of a so-called sandwich type laser recording medium wherein two bases having a recording layer are bonded through a spacer.

1: a base, 2: an attaching hole, 3: a recording material layer, 4: an inorganic moisture-proof layer, 5: a protective layer, and 6 and 7: spacers.

DETAILED DESCRIPTION OF THE INVENTION

When only a protective layer composed of a high molecular compound is provided by being applied to the inorganic material thin layer, the layer of the high molecular compound is easily peeled apart. However, when a radiation hardening resin film or a plasma polymerization film is provided on the inorganic material layer as in the present invention, peeling is not caused due to the high adhesive strength. Further, the effect of preventing moisture absorption is remarkably improved. The reason for that is believed to be that active seeds formed during radiation hardening or plasma polymerization react directly with the surface of the inorganic material film to form some bonds.

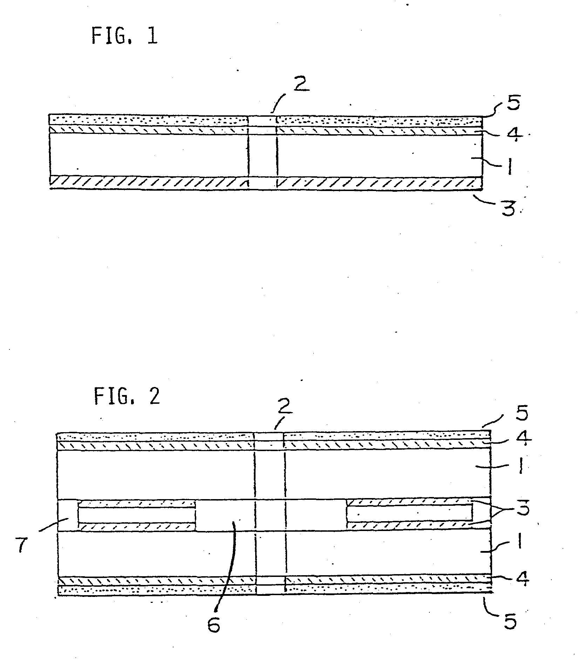

In the following, the present invention is illustrated in detail. In Figure 1, the base 1 is a circular plate having a thickness of 0.2 to 3.0 mm, preferably 1 to 2 mm, and a hole 2 in the center. The base 1 is a plastic comprised of transparent acryl resin such as polymethyl methacrylate resin or cross-linked product of acryl monomer and acrylated urethane oligomer, polyvinyl chloride, vinyl chloride-divinyl oxide copolymer, polycarbonate, polystyrene, etc. On one side of this base 1, a recording material layer is formed. Materials used for the recording material layer 3 generally include metals such as Ge, Te, Bi, In, Sn, Zn and Se, metal compounds such as oxides, sulfides, nitrides and carbides of these metals and mixtures thereof. Particularly, materials such as Al or Cr, etc. are used for duplicate disks specially designated for reproduction. One or more of these metals or metal compounds or an alloy of them is applied to the base 1 directly or through an undercoating layer by various methods such as vacuum evaporation, spattering or ion plating, etc. for form a monolayer or multilayer. When two or more of these recording materials are used, they may be spearately deposited on the base to form a multilayer or they may be co-deposited to form a mixture layer. With duplicating disks specially designed for reproduction, fine unevenness is previously formed on one side of the base 1 using a stamper and it is coated with a layer of reflective material such as Al or Cr, etc. The thickness of recording material layer varies depending on the kind of recording material used but it is generally from 50 to 3,000 Å.

On the opposite side of the base 1 with respect to the recording material layer 3, an inorganic moisture-proof layer 4 is provided. Inorganic materials used for the inorganic moisture-proof layer is one capable of forming a transparent dense film. Examples of such materials include oxides of Sn, Zn, Mg, Al, Si, Zr, Ce, In, Ti, Te, Ge, Ni, Nb, etc., fluorides of Mg, Ca, Ce, Th, Bi, etc. and nitrides of Si, etc. Of these, silicon dioxide, silicon monoxide, aluminium oxide, tin oxide, indium oxide, cerium fluoride, thorium fluoride, bismuth fluoride, magnesium fluoride and $Si_3N_4$ are preferably used, and silicon dioxide, silicon monoxide and magnesium fluoride are particularly preferred with respect to easily forming a dense film and strong bonds with radiation hardenable resin film or plasma polymerization film.

The inorganic moisture-proof layer 4 is formed by vacuum evaporation or sputtering of the inorganic materials as described above so as to have a thickness of 100-5,000Å, preferably 300 to 3,000 Å. On the inorganic moisture-proof layer 4, a protective layer 5 is formed in order to give a scratch-proofing property and water resistance. The protective layer 5 is required to have a strong adhesive strength with respect to the inorganic moisture-proof layer 4, to have a dense structure and to be hard. This protective layer 5 is composed of a resin hardened by applying radiation such as electron rays or ultraviolet rays, etc. or a film formed by plasma polymerization.

Radiation hardenable (meth)acrylate-based or polyene/polythiol-based lacquers are preferably used as the radiation hardenable materials for the protective layer 5 since they do not contain a solvent but they have a low viscosity to easily coat without inclusion of air bubble and are hardened at room temperature by applying a radiation within a short period of time, generally from several seconds to several minutes. The hardened lacquer layer has good adhesion to the inorganic moisture-proof layer 4 and is substantially inert to ambient temperature and humidity.

The (meth)acrylate-based lacquer used in the present invention comprises one or more of monomers such as monoesters, diesters, triesters or tetraesters of (meth)acrylic acid, and/or oligomers thereof. (Hereafter, an acrylate and a methacrylate are collectively called an acrylate or acrylates.) Examples of these acrylates include monoacrylates such as alkyl acrylates, alkoxyalkyl acrylates, phenoxyalkyl acrylates (e.g., ethyl acrylate, n-butyl acrylate, hexyl acrylate, octyl acrylate, 2-ethylhexyl acrylate, octadecyl acrylate, ethoxyethyl acrylate, phenoxyethyl acrylate, etc.) and phenyl acrylate; diacrylates such as alkanediol diacrylates and ketone glycol diacrylates (e.g., 1.3-propanediol diacrylate, diethylene glycol diacrylate, tetraethylene glycol diacrylate, etc.); triacrylates (e.g., trimethylolpropane triacrylate, pentaerythritol triacrylate); tetraacrylates (e.g., pentaerythritol tetraacrylates, etc.) and oligomers of acrylates (e.g., polyethylene glycol acrylate, epoxy acrylate, etc.). Other acrylates can also be used, such as polyester acrylates (e.g., polyesters of diethylene glycol and phthalic acid, in which an acryloylgroup is introduced at the end portion of molecular chain), oligomers having a main chain composed of bisphenol structure (e.g., 1.1'-isopropylene-bis(p-phenoxyethyl acrylate), obtained by introducing an acryloyl group at the end portion of a condensation product derived from bisphenol A and ethylene glycol) and various polyurethane acrylates.

The polyene/polythiol-based lacquer used in the present invention is a mixture of a polyene compound having two or more ethene groups (-CH=CH-) per one molecule and a polythiol compound having two or more thiol groups (-SH) per one molecule. The polyene/polythiol mixture generally has a viscosity lower than 100 cp, preferably lower than 20 cp. Such a low-viscosity mixture can generally be obtained using polyene compounds having a molecular weight of not more than 500 and polythiol compounds having a molecular weight of not more than 1,000.

A mixture of a diene, triene or tetraene compound and a dithiol , trithiol or tetrathiol compound is preferably used as the polyene/polythiol-based lacquer. More preferred are a mixture of a diene compound and a trithiol or tetrathiol compound in an equivalent ratio of 2/1 to 1/2 and a mixture of a triene compound and a dithiol or trithiol compound in an equivalent ratio of 2/1 to 1/2. The "equivalent ratio" herein used means a ratio of the gram equivalent of ethene group to the gram equivalent of thiol group. When the equivalent ratio is outside the range described above, the resulting polyene/polythiol-based lacquer is hardened only when it is exposed to radiation for a long period of time, e.g., more than 30 minutes. On the other hand, a polyene/polythiol-based lacquer having an equivalent ratio fallen within the range described above, e.g., about 1/1, can be hardened with the exposure time of not more than 5 minutes. A mixture of a triene compound and a trithiol compound in an equivalent ratio of 2/1 to 1/2 is particularly preferred as it can be hardened by applying radiation only for a few minutes.

Examples of polyene compounds include esters of polyhydroxy compounds and polybasic acrylic acid, particularly allyl esters, and allyl esters of polybasic acids or polyhydroxy compounds. Preferred examples of polyene compounds include alkanediol diacrylate such as 1,3-butanediol diacrylate, 1,3-hexanediol diacrylate, etc., tetraethylene glycol diacrylate, tripropylene glycol diacrylate, trimethylolpropane triacrylate, diallyl oxalate, diallyl diglycol carbonate, diallyl maleate, diallyl diglycolate, diallyl malonate, triallyl trimellitate, and triallyl isocyanurate.

Examples of polythiol compounds include esters of thioglycolic acid, 2-mercaptopropionic acid, 3-mercaptopropionic acid or mercaptoacetic acid with a polyhydroxy compound, such as pentaerythritol thioglycolate, pentaerythritol tetra(3-mercaptopropionate), trimethylolpropane tri(3-mercaptopropionate), trimethylolpropane trithioglycolate, ethylene glycol dimercapto-propionate, ethylene glycol dimercaptoacetate, and ethylene glycol dithioglycolate.

Further, in order to improve properties of the film, nonreactive polymers may be added in an amount of 10 to 200 % by weight, preferably 20 to 100 % by weight, based on the weight of radiation hardenable material. Examples of nonreactive polymers include polyvinyl chloride, polyvinyl chloride-polyvinyl acetate copolymer, chlorinated polyethylene, polystyrene, nitrocellulose, acetylcellulose, polymethyl methacrylate, polyacetal, polybutyral, polybutadiene and polyacrylonitrile. These nonreactive polymers may be mixed with the radiation hardenable materials and directly coated

- 10 -

on the inorganic moisture-proof layer 4 or the mixture may be coated on a film base such as polyethylene terephthalate film and dried, followed by transferring the dried layer onto the inorganic moisture-proof layer 4 and applying radiation. The latter method is preferred to prevent deformation of the base due to contraction of the coating layer upon drying.

In order to form a film of the radiation hardenable materials on the inorganic moisture-proof layer 4, the radiation hardenable materials are applied by, for example, a spin coater and thereafter they are irradiated with electron rays or ultraviolet rays in an inert gas. When using ultraviolet ray hardening resins, it is necessary to add a suitable polymerization initiator generally in an amount of 0.1 to 10 % by weight and preferably 0.5 to 5 % by weight. Examples of polymerization initiators include radical generators such as benzoin ethyl ether or Michler's ketone, etc. The thickness of the film is generally 0.1 to 100 μm, preferably 0.5 to 50 μm, more preferably 0.5 to 10 μm, by which the scratch-proofing property is sufficiently attained.

When forming the plasma polymerization film, a base provided with an inorganic moisture-proof layer 4 is placed in a vacuum cell. After the cell is exhausted to a pressure of $10^{-2}$ Torrs or less, a monomer gas is introduced and a suitable alternating electric voltage of a conventional alternating current of 50 Hz to a high frequency wave is applied to internal electrodes while keeping the pressure at 0.1 to 3 Torrs to deposit a polymer film on the inorganic moisture-proof layer 4. Instead of the internal electrodes, nonelectrode discharge by an outside coil may be used. In this case, high frequency should be used as applied electric voltage. The plasma polymerization is described in detail in H. Yasuda et al, J. Polym. Sci; Polym. Chem. Ed., 15, 2411-2425 (1977), and J. Chem. Phys., 61, No. 9, 3634-3643 (1974).

Useful monomers to be introduced include saturated hydrocarbons such as methane, ethane, propane, etc., olefins such as ethylene, propylene, etc., aromatic hydrocarbons such as benzene, styrene, p-xylene, etc., fluoride-containing compounds such as tetrafluoroethylene, etc., silicon-containing compounds such as hexamethyldisiloxane, etc. and nitrogen-containing copounds such as acrylonitrile, etc. Of these, tetrafluoroethylene is particularly preferred with respect to the lubricating property and water resistance. The thickness of the film is sufficient to be in a range of $300\overset{o}{A}$-10 μm, preferably $1,000\overset{o}{A}$ to 3 μm.

It is not impossible to apply conventional polymers as an organic protective layer. However, a drying process is required after application, because they should be dis-solved in an organic solvent or used as a latex in order to apply them. Accordingly, there is a problem that the base changes shape due to the high temperatures used during drying which can cause contraction of the coating film.

On the contrary, when using the radiation hardenable resins, hardening can be finished immediately with the radiation, and deformation of the base is small. This is true because the base is not subjected to high temperatures and the coating film undergoes less contraction when hardening. Further, the film after hardening has a cross-linked structure and is dense and hard. Accordingly, it is very suitable as a scratch-proof film.

When using the plasma polymerization film, there are no defects caused by the application and drying, because the film is directly formed from a gas, and a pinhole free dense film can be formed. Further, since reduction of sensitivity is small because an ultra-thin film can be produced, and the rate of forming defects in the layer is small, there is an advantage that a laser recording material having less defects can be obtained.

Figure 2 indicates an air sandwich type laser recording medium. Two recording elements, such as shown in Figure 1, are sandwiched through spacers 6 and 7, whereby information can be recorded on both sides thereof. Further, the inorganic moisture-proof layer and the organic protective layer may be applied not only to the opposite side of the base 1 with respect to the recording material layer 3, but also to both of the outer faces including edge parts of the laser recording medium.

## EXAMPLE 1

On a polymethyl methacrylate circular plate having a thickness of 1.5 mm and an outer diameter of 300 mm, a Te layer having a thickness of 500 Å was formed as a recording layer by vacuum evaporation.

On the opposite side of the base with respect to the recording layer, a $SiO_2$ layer having a thickness of 1,000 Å was formed as a moisture-proof layer by vacuum evaporation. To the resulting layer, 1,6-hexanediol diacrylate was applied by spin coating so as to have a thickness of 5 µm, and electron rays were applied thereto in a nitrogen atmosphere under a condition of 300 KV and 3 M rad to form a scratch-proof protective layer.

Two of the resulting bases were bonded through spacers so that the recording layers faced each other in the inside to produce an air sandwich type disk.

## EXAMPLE 2

The same disk as that in Example 1 was produced, except that a plasma polymerization film of tetrafluoroethylene having a thickness of 0.3 µm was formed instead of the electron ray hardening layer of 1,6-hexanediol diacrylate. The above described film was formed by introducing tetrafluoroethylene gas into an internal electrode type plasma polymerization apparatus and applying a high frequency of 13.56 MHz to the

0123223

electrodes while keeping the pressure at 0.15 Torrs.

COMPARATIVE EXAMPLE 1

The same disk as in Example 1 was produced, except that the $SiO_2$ film and the electron ray hardening layer of 1,6-hexanediol diacrylate were not formed.

COMPARATIVE EXAMPLE 2

The same disk as that in Example 1 was produced, except that the electron ray hardening layer of 1,6-hexanediol diacrylate was not formed.

COMPARATIVE EXAMPLE 3

Instead of forming the electron ray hardening layer of 1,6-hexanediol diacrylate, a solution of polymethyl methacrylate in methyl ethyl ketone was applied by spin coating and dried at 80°C for 20 minutes to form a film having a thickness of 5 μm. However, an air sandwich type disk could not be assembled because the degree of deformation was too great.

Disks of Examples 1 and 2 and Comparative Examples 1 and 2 were allowed to stand in an atmosphere of 40°C and 90% RH for 1 week, and the degree of deformation by moisture absorption was examined. The disk of Comparative Example 1 had a great warp, but the disks of Examples 1 and 2 and Comparative Example 2 hardly changed shape.

The scratch-proofing properties of the disks of Examples 1 and 2 and Comparative Example 2 was then examined by violently rubbing the surface of the base with cotton cloth.

The surface of the disks of Examples 1 and 2 was hardly scratched, but that of the disk of Comparative Example 2 had large scratch marks.

As indicated above, with the laser recording medium of the present invention, an inorganic moisture-proof layer is provided on a side of the base and a protective layer composed of a radiation hardening resin film or a plasma polymerization film is formed thereon. Accordingly, not only is the deformation of the base caused by moisture absorption prevented, but scratches or stains on the surface can be prevented. Consequently, mistakes in recording and reading data caused by deformation of the base are not made.

While the invention has been described in detail and with reference to specific embodiments thereof, it will be apparent to one skilled in the art that various changes and modifications can be made therein without departing from the spirit and scope thereof.

WHAT IS CLAIMED IS:

1. A laser recording medium, comprising:

a transparent plastic base having thereon;

a laser readable-recordable material layer;

an inorganic film provided on the base at a side opposite the side where the laser readable-recordable material layer is provided; and

a protective layer selected from the group consisting of a radiation hardenable resin film and a plasma polymerization film provided on the inorganic material film.

2. A laser recording medium as claimed in Claim 1, wherein the inorganic material film is comprised of a compound selected from the group consisting of silicon dioxide, silicon monoxide and magnesium fluoride.

3. A laser recording medium as claimed in Claim 2, wherein the inorganic material film has a thickness in the range of 100 to 5,000 $\overset{\circ}{A}$.

4. A laser recording medium as claimed in Claim 1, wherein the protective layer is a radiation hardenable resin film.

5. A laser recording medium as claimed in Claim 1, wherein the protective layer is comprised of a plasma polymerization film.

6. A laser recording medium as claimed in Claim 4, wherein the radiation hardenable resin film has a thickness

0123223

in the range of 0.1 to 100 µm.

7. A laser recording medium as claimed in Claim 5, wherein the plasma polymerization film has a thickness in the range of 300 Å to 10 µm.

FIG. 1

FIG. 2